# EUROPÄISCHE PATENTANMELDUNG

(11) **EP 1 876 016 A1**
(43) Veröffentlichungstag der Anmeldung: **09.01.2008**
(21) Anmeldenummer: 06116856.3
(22) Anmeldetag: 07.07.2006
(51) Int. Cl.: B32B 17/10, B32B 3/30

(54) **Geprägte Kunststofffolien für Verbundverglasungen**

(71) Anmelder: Kuraray Europe GmbH, 65926 Frankfurt am Main (DE)
(72) Erfinder: Stenzel, Holger, Dr., 53773, Hennef (DE)
(74) Vertreter: Kisters, Michael Marcus

(57) **Zusammenfassung**

Die Erfindung betrifft eine Kunststofffolie, die zumindest auf einer Seite eine Oberflächenstruktur aus parallel angeordneten Reihen von Erhebungen (a) aufweist, die durch Stege (b) mit einer mindestens 10 % niedrigeren Höhe mit einander verbunden sind.

Die Folien können zur Herstellung von Verbundglaslaminaten verwendet werden.

## Beschreibung

Die vorliegende Erfindung betrifft eine zur Herstellung von Verbundverglasungen geeignete Kunststofffolie, die mindestens eine Seite mit einer Oberflächenstruktur aus durch Stege verbundenen Erhebungen aufweist, sowie die Verwendung dieser Kunststofffolie.

### Technisches Gebiet

Die bei der Herstellung von Verbundglaslaminaten eingesetzten Kunststofffolien (Zwischenschichtfolien) weisen üblicherweise eine gezielt aufgebrachte Rauheit auf, da so im Laminierprozess die zwischen den Glasscheiben und der Zwischenschichtfolie eingeschlossene Luft entfernt werden kann.

Zur Einstellung der Rauheit der Zwischenschichtfolien werden meist Schmelzbruch-Extrusionsverfahren oder Prägeverfahren eingesetzt. Die Extrusion von Kunststofffolien unter Schmelzbruchbedingungen ist z.B. in EP 0 185 863 B1 offenbart und liefert Folien mit einer unregelmäßigen Oberfläche.

Bei der Herstellung von Verbundglasscheiben in Großserien wie z.B. bei Kfz-Windschutzscheiben werden Folien mit einer gerichteten, regelmäßigen Oberflächenstruktur bevorzugt eingesetzt. Solchen Oberflächenstrukturen werden durch Prägeverfahren erzeugt.

### Stand der Technik

Bei den zahlreichen, im Stand der Technik bekannten Prägeverfahren, wird die Kunststofffolie ein- oder zweiseitig zwischen zwei Walzen mit einem regelmäßigen oder unregelmäßigen Prägemuster versehen. So offenbart EP 1 233 007 A1 die Herstellung einer Zwischenschichtfolie mit einer durch Kanäle gebildeten regelmäßigen Oberflächenstruktur. Die Kanäle sind durch Rippen voneinander getrennt, wobei die Rippen kanalübergreifend Öffnungen aufweisen können. Weiterhin können in den Kanälen Barrieren vorhanden sein, die eine zu schnelle Entlüftung des Laminats verhindern.

Eine ähnliche Kanalstruktur ist in WO 95/19885 beschrieben. Hier weisen beide Seiten der Zwischenschichtfolie eine Kanalstruktur auf, die jedoch zur Vermeidung von Moire-Mustern in einem Winkel > 25° zueinander angeordnet sind.

Auch US 6,093,471 beschreibt Zwischenschichtfolien, mit einer Oberflächenstruktur aus V-förmigen, ununterbrochenen Rippen, die ein kanalartiges System bilden. Zur Unterdrückung der Eigenadhäsion der Zwischenschichtfolien weisen die V-förmigen Rippen einen bestimmten Krümmungsradius auf.

US 6,077,374 offenbart eine Zwischenschichtfolie, die eine Seite mit einer unregelmäßigen, durch Schmelzbruchextrusion hergestellte Oberfläche und auf der anderen Seite eine regelmäßige, durch Prägung erzeugte Oberflächenstruktur aufweist.

Bei der Herstellung von Verbundglaslaminaten dürfen die Oberflächenstrukturen keine optischen Störstellen hervorrufen, d.h. sie müssen im Laminierprozess vollständig abschmelzen. Dennoch müssen die Oberflächenstrukturen ein möglichst vollständiges Entweichen der eingeschlossenen Luft ermöglichen, d.h. sie dürfen nicht zu schnell abschmelzen, sondern müssen eine ausreichende mechanische und thermische Stabilität aufweisen.

Die im Stand der Technik beschriebenen Oberflächenstrukturen sind hier noch verbesserungsfähig.

### Aufgabe

Aufgabe der vorliegenden Erfindung war es daher eine Kunststofffolie mit einer Oberflächenstruktur bereit zu stellen, die bei der Herstellung von Verbundglaslaminaten ein gutes Entlüftungsverhalten zeigt.

### Darstellung der Erfindung

Gegenstand der vorliegenden Erfindung ist daher eine Kunststofffolie, die zumindest auf einer Seite eine Oberflächenstruktur aus parallel angeordneten Reihen von Erhebungen (a) aufweist, die durch Stege (b), welche eine mindestens 10 % niedrigere Höhe als die Erhebungen aufweisen mit einander verbunden sind, wobei die parallel angeordneten Reihen so versetzt zu einander angeordnet sind, dass die Erhebungen einer Reihe an die Stege der benachbarten Reihe angrenzen und eine gemeinsame Talsohle (c) bilden.

Erfindungsgemäße Folien weisen bei der Herstellung von Verbundglaslaminaten ein besonders gutes Entlüftungsverhalten auf, da die Luft nicht nur über die Talsolen zwischen der Erhebungen sondern auch senkrecht hierzu über die Stege zwischen den Erhebungen entweichen kann. Dies ist bei einem vorzeitigen Randverschluss des Laminats von Vorteil, da die eingeschlossene Luft noch über andere, offene Randstellen entweichen kann. Die Stege verleihen der Oberflächenstruktur eine gewisse mechanische und thermische Stabilität, da unter den Herstellungsbedingungen eines Verbundglaslaminats zunächst die höheren Erhebungen abschmelzen und die Glasscheiben auf den niedrigeren Stegen aufliegen. Da die Luft dann immer noch zwischen den Stegen entweichen kann, resultiert ein hervorragendes Entlüftungsverhalten der Folie im Laminierprozess.

Diese Oberflächenstrukturen werden durch Prägen auf die Kunststofffolie aufgebracht. Hierzu ist es erforderlich, die zu prägende Struktur als Matrize auf eine Prägewalze aufzubringen und die Kunststofffolie mit einer ausreichenden Kraft auf diese Prägewalze zu pressen. Hierzu geeignete Verfahren sind dem Fachmann bekannt und können z.B. EP 0 741 640 B1, US 5,972,280, US 4,671,913, US 2003/0022015, WO 01/72509,0 US 6,077,374 oder US 6,093,471 entnommen werden.

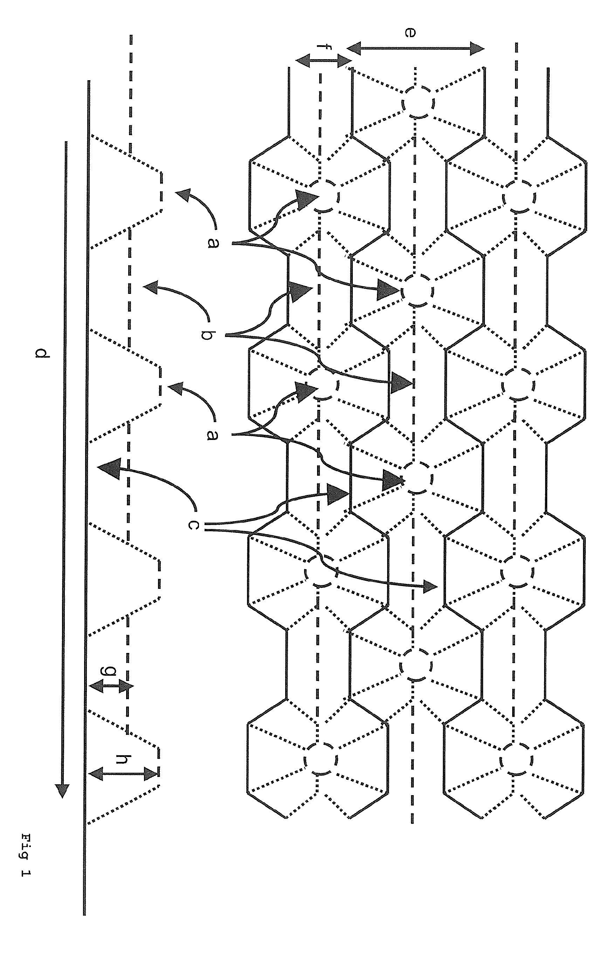

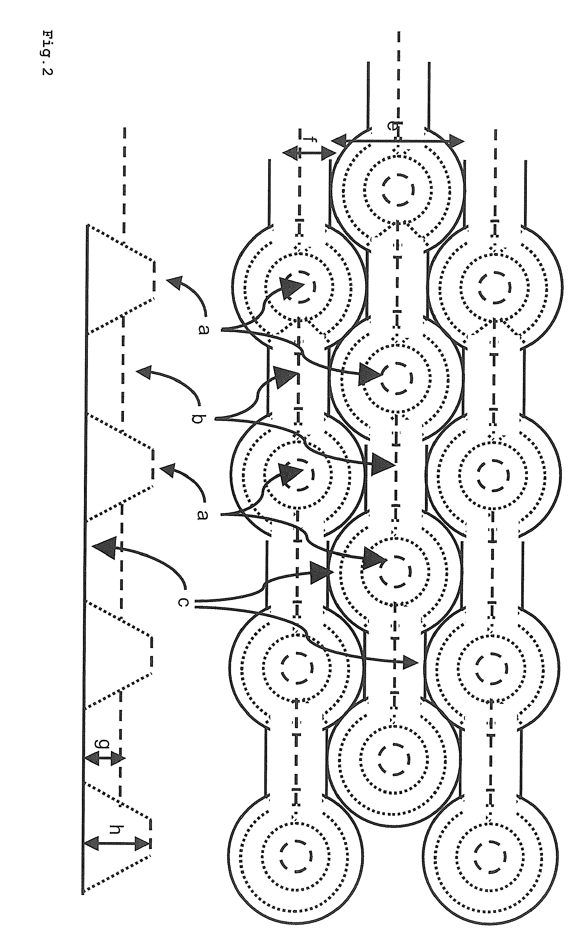

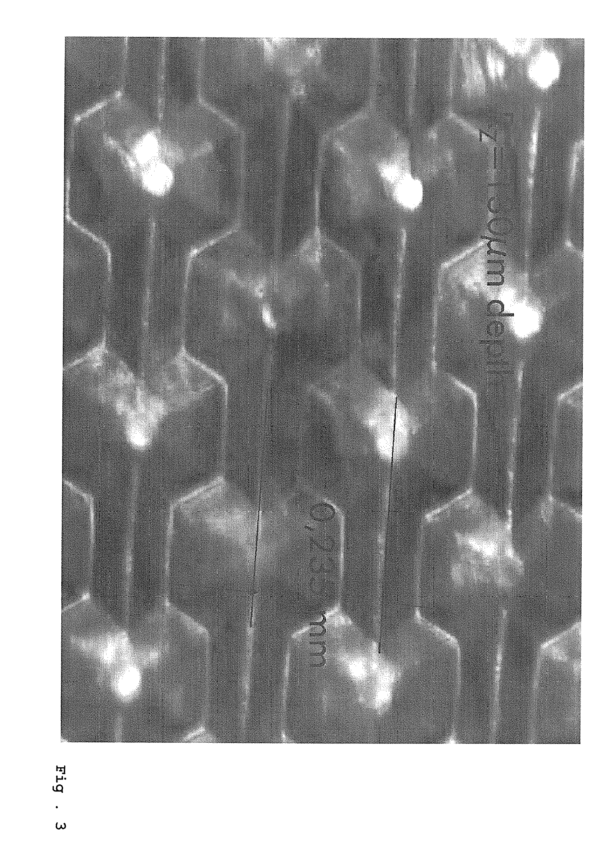

Die erfindungsgemäß eingesetzte Struktur ist schematisch in den Fig. 1 und 2 skizziert. In der Auf- und Seitenansicht sind die Erhebungen mit (a) und die zwischen den Erhebungen liegenden Stege mit (b) gekennzeichnet. Erhebungen und Stege von benachbarten Reihen besitzen eine gemeinsame Talsohle (c), die nahezu ununterbrochen ist. Die in den Fig. 1 und 2 dargestellten Strukturen sollen lediglich Beispiele für erfindungsgemäß einsetzbare Strukturen darstellen; die vorliegende Erfindung ist nicht auf diese Geometrien beschränkt. Fig. 3 zeigt eine Oberflächenaufnahme einer Prägewalze mit einer Struktur nach Fig. 1.

Die Oberflächenstruktur der erfindungsgemäßen Folien weist im Idealfall eine Qualität gemäß den Fig. 1 oder 2 auf. Abhängig von den Prozessparametern im Prägeverfahren (Geschwindigkeit, Folientemperatur, Temperatur der Prägewalzen, Prägedruck) kann die Qualität der Oberflächenstruktur der erfindungsgemäßen Folien hiervon abweichen. Die im Rahmen der vorliegenden Erfindung genannten Maße der Struktur sind daher als Mittelwerte zu verstehen. Die Mittelwerte sind über mindestens 10 Messwerte gleicher Objekte (z.B. Höhe von 10 Erhebungen) zu bestimmen und anschließend arithmetisch zu mitteln. Die Höhenangaben beziehen sich auf die zwischen den Erhebungen liegende Talsohle, wobei als "Nullhöhe" eine mittlere Höhe der Talsohle über eine Distanz von 0,5 cm ermittelt wird. Die Höhe der Erhebungen oder der Stege wird durch Mitteln der jeweils 2 höchsten und niedrigsten Punkte einer Erhebung oder eines Stegs bestimmt. Für Breitenangaben wird analog vorgegangen, wobei die zu bestimmende Breite an mindestens 5 Messpunkten bestimmt wird.

Die Erhebungen und Stege der Oberflächenstrukturen erfindungsgemäßer Folien sind in parallelen Reihen angeordnet. Unter der Laufrichtung dieser Reihen wird im Rahmen der vorliegenden Erfindung die Richtung verstanden, in der sich die Reihen fortsetzen, wie z.B. die in Fig. 1 gekennzeichnete Richtung (d). Die Angabe "gegen die Laufrichtung" bezieht sich dagegen auf eine senkrecht zur Laufrichtung liegende Richtung, wie z.B. (e) oder (f) in Fig. 1.

Bevorzugt weisen die Erhebungen eine in- und/oder gegen die Laufrichtung der Reihen bestimmte Breite von 110 bis 400 %, bevorzugt 150 bis 300 %, insbesondere 180 bis 220 % der in gleichen Laufrichtung bestimmten Breite der Stege auf. Wird die Breite der Erhebungen und Stege gegen die Laufrichtung bestimmt, so ergeben sich die in Fig. 1 mit (e) und (f) bezeichneten Breiten.

Die in und/oder gegen die Laufrichtung der Reihen bestimmte maximale Breite der Erhebungen (a) zwischen zwei Talsohlen beträgt 100 bis 750 µm, bevorzugt 100 bis 300 µm, insbesondere 150 bis 250 µm oder 300 bis 750 µm, bevorzugt 500 bis 750 µm.

Analog ist die maximale Breite der Stege b) in und/oder gegen die Laufrichtung der Reihen, zwischen zwei Talsohlen bevorzugt 50 bis 250 µm, insbesondere 100 bis 200 µm.

Die zwischen zwei Reihen gebildete Talsohle (c) ist bevorzugt nahezu ununterbrochen, d.h. sie weist einen im Rahmen der Prägetechnik möglichen, glatten Verlauf ohne Barrieren o.ä. auf. Die in Laufrichtung der Reihen bestimmte Breite der Talsohle, d.h. der tiefste Punkt zwischen zwei Reihen, soll möglichst gering sein und weist eine maximale Breite von 0 bis 50 µm, insbesondere 1 bis 40 µm auf.

Die Erhebungen (a) sind bevorzugt in einer Höhe von 60 bis 250 µm, insbesondere 100 bis 200 µm ausgeführt (h in Fig. 1). Die Höhe der Stege b) kann 30 bis 225 µm, insbesondere 50 bis 100 µm betragen ((g) in Fig. 1).

Die Erhebungen können eine pyramiden- oder konusförmige Geometrie aufweisen, die sowohl symmetrisch als auch asymmetrisch ausgebildet sein kann.

Die Grundfläche der Erhebungen (a) kann rund, vier-, sechs- oder achteckig jeweils symmetrisch oder asymmetrisch ausgeführt sein. Die die Erhebungen verbindenden Stege (b) weisen bevorzugt eine halbrunde oder dachförmige Geometrie auf.

Erfindungsgemäße Kunststofffolien können ein- oder beidseitig mit den genannten Oberflächenstrukturen ausgerüstet sein.

Wenn beide Oberflächen der Kunststofffolie die genannten Oberflächenstrukturen besitzen, so weisen diese einen in der Laufrichtung der Reihen bestimmbaren Winkel (z.B. durch eine fiktive Verbindungslinie über die Erhebungen) gegeneinander auf. Bevorzugt ist in einer Variante der vorliegenden Erfindung ein Winkel von 0 bis 45°, insbesondere 1 bis 45° und in einer weiteren Variante ein Winkel von 45 bis 90°. Mit einem von 0° unterschiedlichen Winkel kann die Bildung von sog. Moire-Mustern im Verbundglaslaminat vermieden werden.

Die erfindungsgemäßen Kunststofffolien weisen in der Praxis eine langgestreckt-rechteckige Geometrie in Form eines Bandes auf. Dies trifft insbesondere auf Folien, die durch Extrusion hergestellt werden, zu. Bei der Weiterverarbeitung der erfindungsgemäßen Kunststofffolien kann es günstig sein, dass die parallel angeordneten Reihen der Oberflächenstrukturen einen von 0° verschiedenen Winkel zur Laufrichtung der Folie einnehmen. Zur Verbesserung der Entlüftungseigenschaften des Laminats beträgt dieser Winkel bevorzugt 10 bis 80°.

Erfindungsgemäße Kunststofffolien werden bevorzugt durch Extrusion eines Polymermaterials erhalten. Sie enthalten bevorzugt ein Material der Gruppe weichmacherhaltiges Polyvinylacetal, weichmacherhaltiges Polyvinylbutyral, Ethylen/Vinylacetat-Copolymere, Ethylen/Vinylacetat/Vinylalkohol-Copolymere, teilacetalisiertes Ethylen/Vinylacetat/Vinylalkohol-Copolymer, Polyethylenterephthalat, Polyvinylchlorid und/oder Polyurethan. Materialien dieser Art sind dem Fachmann bekannt und müssen nicht näher beschrieben werden.

Der Prägeprozess selbst wird in bekannter Weise durchgeführt. Es hat sich in der Praxis bewährt, Folien mit einer möglichst niedrigen Rauhigkeit von Rz 1-30 mit der genannten Oberflächenstruktur zu überprägen. Folien dieser Art können durch Extrusion einer Folie unter Schmelzbruchbedingungen z.b. gemäß EP 0185863 erhalten werden.

Erfindungsgemäße Folie weisen hervorragende Entlüftungseigenschaften bei der Herstellung von Verbundglaslaminaten auf. Bevorzugt werden daher die genannten Folien zur Herstellung von Verbundglaslaminaten aus ein oder mehreren Kunststofffolien und mindestens zwei Glas- oder Kunststoffscheiben verwendet. Die Herstellung solcher Verbünde ist dem Fachmann bekannt und kann z.B. in WO 03/033583 nachgelesen werden.

### Beispiele

Es wurde eine weichmacherhaltige PVB-Folie aus 72,5 Gew.% PVB, 25,0 Gew. % 3G8 mit Kalium- und Magnesiumsalzen als Antihaftmittel mit einer beidseitigen Rauheit R_{z} ≤ 5 µm zwischen einer Anpresswalze aus Gummi und einer Prägewalze, die eine inverse Oberflächenstruktur zu Fig. 2 aufwies, geprägt. Die so erhaltene einseitig geprägte Folie wurde anschließend in einer zweiten Prägestufe mit identischen Eigenschaften auf der zweiten Seite zu einer beidseitig geprägten Folie verarbeitet.
Anpresswalze aus Gummi:
   Härte Gummiwalze 70 ± 5 Shore-A
   Gummiwalzendurchmesser: 255 mm
Prägewalze (Struktur invers gemäß Fig 2.):
   Prägewalzendurchmesser: 245 mm
   Höhe der Erhebungen ca. 135 µm
   Breite der Erhebungen ca. 310 µm
   Abstand der Erhebungen in Laufrichtung ca. 410 µm
   Höhe der Stege ca. 65 µm
   Breite der Stege ca. 130 µm

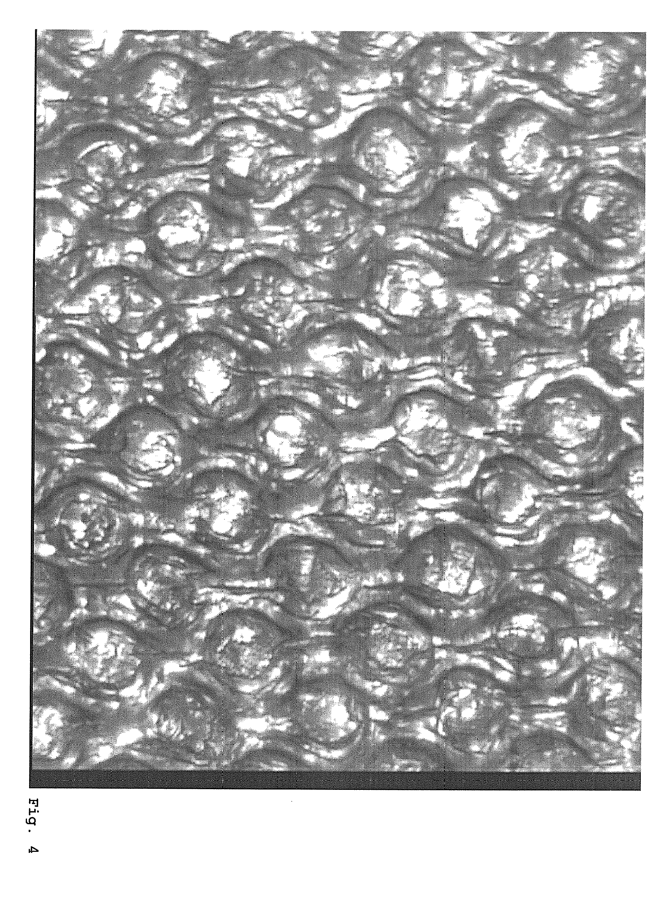

Fig. 4 zeigt eine Oberflächenaufnahme einer so erhaltenen Folie.

Die Folie wurde anschließend zwischen zwei Glasscheiben gelegt und über 20 min. bei Raumtemperatur und anschließend jeweils 25 min bei 75 °C oder 95 °C im Vakuumschrank bei 200 mbar absolut zu einem nahezu transparenten Vorverbund verarbeitet.
Zum Vergleich wurden Folien mit einer durch Schmelzbruch erzeugten unregelmäßigen Oberflächenstruktur (z.B. gemäß EP 0 185 863) dem gleichen Vorverbundprozess unterzogen.

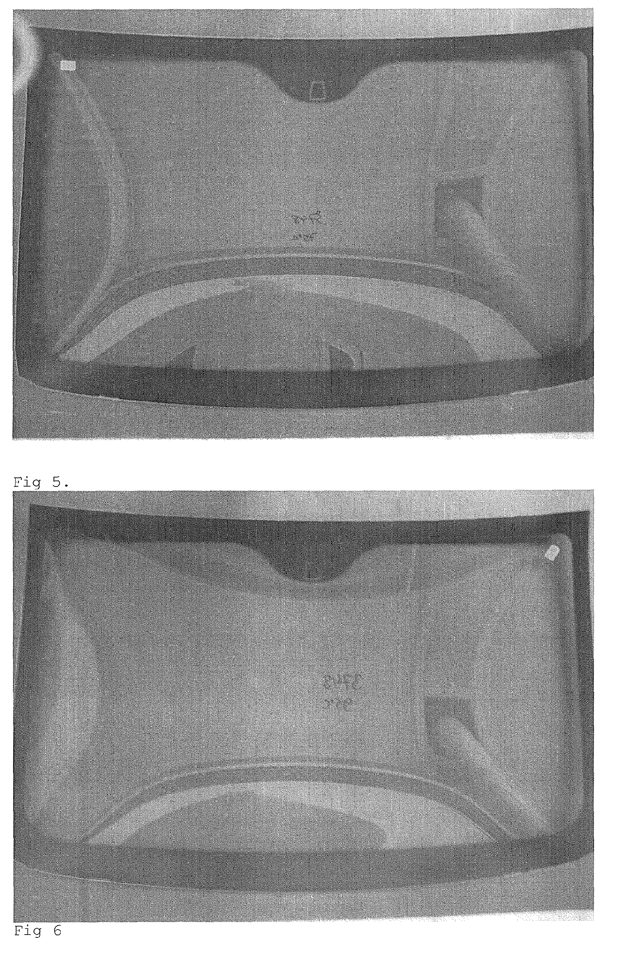

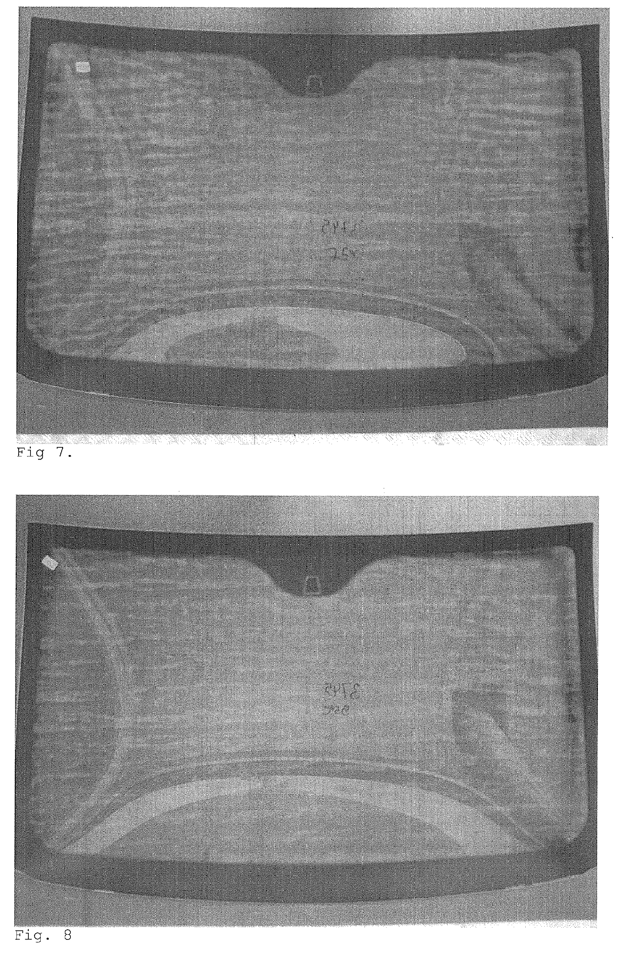

Fig. 5 und 6 zeigen mit erfindungsgemäßen Folien hergestellte Vorverbünde, hergestellt bei 75 °C oder 95 °C Vorverbundtemperatur. Die Vorverbünde waren nahezu transparent und wiesen keine Blasen oder Trübungen auf.

Demgegenüber zeigen Fig. 7 und 8 Vorverbünde hergestellt aus Folie mit Schmelzbruchoberfläche (75 °C bzw. 95 °C Herstelltemperatur). Die Vorverbünde enthielten Luftblasen und waren entsprechend trübe.

Die eingeschlossene Luft kann zu Defekten (z.B. Blasen) im entgültigen Verbundglas führen. Bei den mit erfindungsgemäßen Folien hergestellten Vorverbünden befindet sich dagegen keine Luft mehr, womit die Gefahr einer Blasenbildung praktisch ausgeschlossen werden kann.

Die geprägte Folien wies bei der Verbundglasherstellung im Vergleich zu einer Folie mit unregelmäßiger Schmelzbruchoberfläche erheblich verbesserte Entlüftungseigenschaften auf.

## Patentansprüche

1. Kunststofffolie, die zumindest auf einer Seite eine Oberflächenstruktur aus parallel angeordneten Reihen von Erhebungen (a) aufweist, die durch Stege (b) die eine mindestens 10 % niedrigere Höhe als die Erhebungen aufweisen mit einander verbunden sind, wobei die parallel angeordneten Reihen so versetzt zu einander angeordnet sind, dass die Erhebungen einer Reihe an die Stege der benachbarten Reihe angrenzen und eine gemeinsame Talsohle (c) bilden.

2. Kunststofffolie nach Anspruch 1, **dadurch gekennzeichnet, dass** die in und/oder gegen die Laufrichtung der Reihen bestimmte Breite der Erhebungen (a) 110 bis 400 % der in gleicher Laufrichtung bestimmten Breite der Stege beträgt.

3. Kunststofffolie nach Anspruch 1 oder 2, **dadurch gekennzeichnet, dass** die zwischen zwei Reihen gebildete Talsohle (c) nahezu ununterbrochen ist und eine gegen die Laufrichtung der Reihen bestimmte maximale Breite von 0 - 50 µm aufweist.

4. Kunststofffolie einem der Ansprüche 1 bis 3, **dadurch gekennzeichnet, dass** die Erhebungen (a) eine Höhe von 60 - 250 µm aufweisen.

5. Kunststofffolie nach einem der Ansprüche 1 bis 4, **dadurch gekennzeichnet, dass** die Erhebungen (a) eine maximale Breite zwischen zwei Talsohlen von 100 - 750 µm aufweisen.

6. Kunststofffolie nach einem der Ansprüche 1 bis 5, **dadurch gekennzeichnet, dass** die Stege (b) eine Höhe von 30 - 225 µm aufweisen.

7. Kunststofffolie nach einem der Ansprüche 1 bis 6, **dadurch gekennzeichnet, dass** die Stege (b) eine in und/oder gegen die Laufrichtung der Reihen bestimmte maximale Breite zwischen zwei Talsohlen von 50 - 250 µm aufweisen.

8. Kunststofffolie nach einem der Ansprüche 1 bis 7, **dadurch gekennzeichnet, dass** die Erhebungen (a) eine pyramiden- oder konusförmige Geometrie besitzen.

9. Kunststofffolie nach einem der Ansprüche 1 bis 8, **dadurch gekennzeichnet, dass** die Erhebungen (a) eine runde, viereckige, sechseckige oder achteckige Grundfläche besitzen.

10. Kunststofffolie nach einem der Ansprüche 1 bis 9, **dadurch gekennzeichnet, dass** die Stege (b) eine halbrunde oder dachförmige Geometrie aufweisen.

11. Kunststofffolie nach einem der Ansprüche 1 bis 10, **dadurch gekennzeichnet, dass** die parallel angeordneten Reihen zur Laufrichtung der Folie einen Winkel von 10 bis 80° einnehmen.

12. Kunststofffolie nach einem der Ansprüche 1 bis 11, **dadurch gekennzeichnet, dass** beide Oberflächen der Kunststofffolie die Oberflächenstruktur aufweisen.

13. Kunststofffolie nach Anspruch 12, **dadurch gekennzeichnet, dass** die parallel angeordneten Reihen der beiden Oberflächen der Kunststofffolie einen in Laufrichtung der Reihen bestimmten Winkel von 0 bis 45° zueinander aufweisen.

14. Kunststofffolie nach Anspruch 13, **dadurch gekennzeichnet, dass** die parallel angeordneten Reihen der beiden Oberflächen der Kunststofffolie einen in Laufrichtung der Reihen bestimmten Winkel von 45 bis 90° zueinander aufweisen.

15. Kunststofffolie nach einem der Ansprüche 1 bis 14, **dadurch gekennzeichnet, dass** die Kunststofffolie ein Material der Gruppe weichmacherhaltiges Polyvinylacetal, weichmacherhaltiges Polyvinylbutyral, Ethylen/Vinylacetat-Copolymere, Ethylen/Vinylacetat/Vinylalkohol-Copolymere, teilacetalisiertes Ethylen/Vinylacetat/Vinylalkohol-Copolymer, Polyethylenterephthalat, Polyvinylchlorid und/oder Polyurethan enthält.

16. Verwendung der Kunststofffolie gemäß einem der Ansprüche 1 bis 15 zur Herstellung von Verbundglaslaminaten.
